# EUROPÄISCHE PATENTSCHRIFT

(11) **EP 4 169 619 B1**
(45) Veröffentlichungstag und Bekanntmachung des Hinweises auf die Patenterteilung: **16.10.2024**
(21) Anmeldenummer: 21204035.6
(22) Anmeldetag: 21.10.2021
(51) Int. Cl.: B03B 9/06, B29B 17/02, B29B 17/04, B29L 9/00

(54) **VERFAHREN UND VORRICHTUNG ZUR AUFBEREITUNG VON PHOTOVOLTAIKMODULEN**
METHOD AND DEVICE FOR TREATING PHOTOVOLTAIC MODULES
PROCÉDÉ ET DISPOSITIF DE PRODUCTION DE MODULES PHOTOVOLTAÏQUES

(43) Veröffentlichungstag der Anmeldung: 26.04.2023
(73) Patentinhaber: Erutec GmbH, 93133 Burglengenfeld (DE)
(72) Erfinder: EBENSBERGER, Stephan, 93133 Burglengenfeld (DE)
(74) Vertreter: Hofstetter, Schurack & Partner

(56) Entgegenhaltungen:
- WO-A1-2021/192254
- CN-A- 108 579 976
- JP-A- 2018 086 651

## Beschreibung

Die vorliegende Erfindung betrifft ein Verfahren und eine Vorrichtung zur Aufbereitung von Photovoltaikmodulen.

Die Aufbereitung von gebrauchten Photovoltaikmodulen dient insbesondere zur Wiederverwertung der in den Photovoltaikmodulen enthaltenen Wertstoffe. Dabei handelt es sich um Kunststoffe, Silikone, Glas, Halbmetalle, insbesondere Silizium, und Metalle oder Metalllegierungen, die aus ökonomischen und ökologischen Gründen einer Wiederverwertung zugeführt werden sollen.

Nachteilig an den bisher bekannten Verfahren und Vorrichtungen ist jedoch, dass die Trennung der einzelnen Wertstoffe der Photovoltaikmodule nur sehr unvollständig erfolgt, so dass eine manuelle und damit kostenintensive Nachsortierung der zerlegten Module erfolgen muss. Eine derartige Vorrichtung und ein derartiges Verfahren ist aus der WO2021192254 bekannt.

Es ist daher Aufgabe der vorliegenden Erfindung ein Verfahren und eine Vorrichtung der eingangs genannten Art bereitzustellen, die eine automatisierte, kostengünstigere und vollständigere Auftrennung von Photovoltaikmodulen in darin enthaltene Wertstoffe ermöglicht.

Zur Lösung dieser Aufgabe dient ein Verfahren gemäß den Merkmalen des Anspruchs 1 sowie eine Vorrichtung mit den Merkmalen des Anspruchs 13. Vorteilhafte Ausgestaltungen mit zweckmäßigen Weiterbildungen der Erfindung sind in den Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft ein Verfahren zur Aufbereitung von Photovoltaikmodulen umfassend zumindest folgende Schritte:
- Zuführung des Photovoltaikmoduls zu mindestens einer Zerkleinerungsvorrichtung und Zerkleinern des Photovoltaikmoduls;
- Aufteilung des mittels der Zerkleinerungsvorrichtung erhaltenen Mahlguts in mindestens drei unterschiedlich große Kornfraktionen;
- Rückführen einer groben Kornfraktion zu der Zerkleinerungsvorrichtung zur weiteren Zerkleinerung;
- Überführen einer mittleren Kornfraktion zu einer ersten Trennvorrichtung für die Separation von leitenden und nicht-leitenden Materialien des Mahlguts;
- Überführen einer feinen Kornfraktion zu einer Trocknungsvorrichtung und Trocknen der feinen Kornfraktion; und
- Überführen der getrockneten feinen Kornfraktion zu der ersten Trennvorrichtung oder einer weiteren Trennvorrichtung für die Separation von leitenden und nicht-leitenden Materialien des Mahlguts.

Durch das erfindungsgemäße Verfahren ist eine automatisierte und damit kostengünstige Auftrennung von gebrauchten Photovoltaikmodulen in die darin enthaltenen Wertstoffe gewährleistet. Insbesondere erfolgt die Auftrennung vollständig, da die erhaltene grobe Kornfraktion solange der Zerkleinerungsvorrichtung zugeführt wird, bis die gewünschte mittlere und feine Kornfraktion erhalten wird. Das Mahlgut der mittleren und feinen Kornfraktion lässt sich sehr gut in die einzelnen Werkstoffe trennen. Dabei kann die grobe Kornfraktion einen durchschnittlichen Partikeldurchmesser von >5,0 mm aufweisen und/oder die mittlere Kornfraktion einen durchschnittlichen Partikeldurchmesser von >1,0 mm bis <5,0 mm aufweisen und/oder die feine Kornfraktion einen durchschnittlichen Partikeldurchmesser von >0,01 mm bis <1,0 mm aufweisen. Abweichungen der einzelnen Korngrößenbereiche von +/- 10 Prozent sind noch als von der Erfindung umfasst anzusehen.

In einer vorteilhaften Ausgestaltung des erfindungsgemäßen Verfahrens erfolgt vor einer Zuführung des aufzubereitenden Photovoltaikmoduls zu der Zerkleinerungsvorrichtung eine manuelle und/oder mechanische Vorzerkleinerung und/oder Demontage des Photovoltaikmoduls. Dabei können ein Metallrahmen, insbesondere ein Aluminiumrahmen, des Photovoltaikmoduls sowie üblicherweise vorhandene Anschlussdosen mit Kabeln beziehungsweise Kabelboxen mit Verkabelung von dem Photovoltaikpaneel getrennt werden und einer separaten Weiterverarbeitung zugeführt werden. Das verbleibende Photovoltaikpaneel, welches insbesondere aus den Solarzellen, entsprechenden Gläsern und Kunststoffschichten beziehungsweise Kunststofffolien besteht, wird dann der Zerkleinerungsvorrichtung zugeführt. Auch dieser Schritt trägt zur nahezu vollständigen Trennung der Wertstoffe des aufzuarbeitenden Photovoltaikmoduls bei. Die Zerlegung des Photovoltaikmoduls kann dann beispielsweise mittels hydraulischer oder pneumatischer Spreizvorrichtungen erfolgen.

In weiteren vorteilhaften Ausgestaltungen des erfindungsgemäßen Verfahrens wird nach der Separation von leitenden und nicht-leitenden Materialien des Mahlguts die Fraktion der nicht-leitenden Materialien einer zweiten Trennvorrichtung zur Separation der enthaltenen Glaspartikel von weiteren nicht-leitenden Partikeln, insbesondere von Kunststoff- und/oder Silikonpartikeln, zugeführt. Des Weiteren besteht die Möglichkeit, das nach der Separation von leitenden und nicht-leitenden Materialien des Mahlguts die Fraktion der leitenden Materialien einer dritten Trennvorrichtung zur Separation der enthaltenen Metallpartikel voneinander und von weiteren leitenden Partikeln, insbesondere von Siliziumpartikeln, zugeführt wird. Damit ist eine quantitative und qualitative Trennung der Wertstoffe voneinander gewährleistet.

In einer weiteren vorteilhaften Ausgestaltung des erfindungsgemäßen Verfahrens wird nach der Separation von leitenden und nicht-leitenden Materialien des Mahlguts zumindest ein Teil des Mahlgut nochmals der Trockenvorrichtung zu weiteren Trocknung zugeführt. Damit ist gewährleistet, dass eine unvollständige Trennung, die durch zu hohe Feuchtigkeitsgehalte des Mahlguts bedingt ist, vermieden werden kann.

In weiteren vorteilhaften Ausgestaltungen des erfindungsgemäßen Verfahrens erfolgt die Aufteilung des mittels der Zerkleinerungsvorrichtung erhaltenen Mahlguts mittels

Sieben und/oder einer Dichtesortierung. Zudem kann die Separation von leitenden und nicht-leitenden Materialien des Mahlguts mittels elektrostatischer Separation erfolgt. Des Weiteren besteht die Möglichkeit, dass die Separation von leitenden, unterschiedlich ausgebildeten Materialien des Mahlguts voneinander ebenfalls mittels elektrostatischer Separation erfolgt. Des Weiteren kann die Trennung unterschiedlicher Metalle und/oder Silizium mittels eines Ausschmelzverfahrens erfolgen. Durch diese Maßnahmen lässt sich eine qualitativ hochwertige Trennung der Wertstoffe voneinander erzielen.

In einer weiteren vorteilhaften Ausgestaltung des erfindungsgemäßen Verfahrens erfolgt vor der Überführung der mittleren Kornfraktion zu der ersten Trennvorrichtung eine Trennung der mittleren Kornfraktion in eine relativ leichte Fraktion mit geringerer Dichte bestehend insbesondere aus Kunststoff und/oder Kunststofffolie und eine relativ schwere Fraktion mit höherer Dichte bestehend insbesondere aus Glas und leitenden Materialien. Die Trennung in eine leichte und schwere Fraktion kann dabei mittels mindestens einem Gegenstromsichter, einem Windsichter oder einem Schwerkraftsichter erfolgen. Auch diese erfindungsgemäße Maßnahme trägt zur qualitativ hochwertigen Trennung der einzelnen Wertstoffe im Mahlgut des Photovoltaikmoduls voneinander bei.

In einer vorteilhaften Ausgestaltung des erfindungsgemäßen Verfahrens weist die feine Kornfraktion des Mahlguts nach dem Trocknen einen Feuchtegehalt von kleiner 0,1% auf. Dieser geringe Feuchtegehalt erlaubt eine vollständige Trennung der feinen Kornfraktion in unterschiedliche Wertstoffe.

Ein weiterer Aspekt der vorliegenden Erfindung betrifft eine Vorrichtung zur Aufbereitung von Photovoltaikmodulen umfassend mindestens eine Zerkleinerungsvorrichtung für die Zerkleinerung der Photovoltaikmodule, mindestens eine Sieb- oder Dichtesortierungsvorrichtung für eine Aufteilung des mittels der Zerkleinerungsvorrichtung erhaltenen Mahlguts in mindestens drei unterschiedlich große Kornfraktionen, mindestens eine Trocknungsvorrichtung für die Trocknung einer feinen Kornfraktion des Mahlguts und mindestens eine erste Trennvorrichtung und/oder weitere Trennvorrichtung für die Separation von leitenden und nicht-leitenden Materialien des Mahlguts in einer mittleren Korngröße des Mahlguts und/oder in der mittels der Trocknungsvorrichtung getrockneten feinen Korngröße des Mahlguts. Die erfindungsgemäße Vorrichtung erlaubt eine automatisierte, kostengünstige und vollständige Auftrennung von Photovoltaikmodulen in die darin enthaltenen Wertstoffe. Insbesondere die Auftrennung des aus den Photovoltaikmodulen erhaltenen Mahlguts in mindestens drei unterschiedlich große Kornfraktionen trägt zu einer qualitativ hochwertigen Trennung der Wertstoffe voneinander bei. Zudem kann die Trennung beziehungsweise Aufbereitung der Photovoltaikmodule hochautomatisiert durchgeführt werden. Die beschriebene Trocknungsvorrichtung kann ein Trowaltrockner sein. Die Siebvorrichtung kann eine mobile, verfahrbare Vibrations-Taumelsiebvorrichtung sein. Die Vibrations-Taumelsiebvorrichtung ermöglicht eine sehr gute Trennung der einzelnen Korngrößenfraktionen voneinander und ist aufgrund ihrer verfahrbaren Ausgestaltung an unterschiedlichsten Einsatzorten verwendbar.

In einer vorteilhaften Ausgestaltung der erfindungsgemäßen Vorrichtung weist diese mindestens einen Gegenstromsichter, Windsichter oder Schwerkraftsichter auf, wobei der Gegenstromsichter, Windsichter oder Schwerkraftsichter der Zerkleinerungsvorrichtung nachgeschaltet ist und zur Aufnahme und Trennung der mittleren Kornfraktion des Mahlguts in eine relativ leichte Fraktion mit geringer Dichte bestehend insbesondere aus Kunststoff und/oder Kunststofffolie und eine relativ schwere Fraktion mit einer höheren Dichte bestehend insbesondere aus Glas und leitenden Materialien, ausgebildet ist. Dadurch ist eine Vorsortierung der mittleren Kornfraktion des Mahlguts, die einen durchschnittlichen Partikeldurchmesser von >1,0 mm bis <5,0 mm aufweist, möglich. Die abgesonderte Leichtfraktion ist relativ sortenrein, sodass der darin enthaltene Kunststoff, die Kunststofffolien oder auch Silikonpartikel direkt einer Weiterverwertung zugeführt werden können. So können die erhaltenen Folien beispielsweise als Ersatzbrennstoff mit einem Heizwert von ca. 33500 kJ/kg verwendet werden. Die relativ schwerere Fraktion besteht insbesondere als Glas und leitenden Materialien, die je nach Reinheitsgrad der Mischung entweder sofort weiterverwendet werden können oder der ersten Trennvorrichtung zugeführt werden. Die leitenden Materialien der schwereren Fraktion bestehen üblicherweise aus metallischen Elementen wie Kupfer, Zinn und Blei. Diese können als Rohstoffe für die Bronzeindustrie verwendet werden.

In einer weiteren vorteilhaften Ausgestaltung der erfindungsgemäßen Vorrichtung weist diese mindestens eine zweite Trennvorrichtung für die Separation der erhaltenen nicht-leitenden Materialien in Glaspartikel und weitere nicht-leitende Partikel, insbesondere Kunststoff- und/oder Silikonpartikel, auf. Des Weiteren kann die Vorrichtung mindestens eine dritte Trennvorrichtung für die Separation der erhaltenen leitenden Materialien in Metallpartikel unterschiedlicher Elemente und weitere leitende Partikel, insbesondere Siliziumpartikel, umfassen. Dabei kann die erste Trennvorrichtung und/oder die weitere Trennvorrichtung ein elektrostatischer Metall-/Kunststoffseparator sein. Die Trennung der leitenden von den nicht-leitenden Partikeln sowohl in der feinen Korngröße des Mahlguts (Partikelgröße 0,01 mm bis < 1,0 mm) wie auch des Mahlguts der mittleren Korngröße erfolgt dabei mittels elektrostatischer Trennung. Die zweite Trennvorrichtung zur Trennung von Glaspartikeln und weiteren nicht-leitenden Partikeln kann beispielsweise ein Windsichter sein. Schließlich kann die dritte Trennvorrichtung für die Separation der erhaltenen leitenden Materialien in unterschiedliche Metallpartikel und weitere leitende Partikel, insbesondere Siliziumpartikel, ebenfalls ein elektrostatischer Separator sein. Es ist aber auch möglich, dass diese Restfraktion mittels eines Ausschmelzverfahrens in beispielsweise die Bestandteile Silizium, Kupfer und Blei-Zinn aufgetrennt wird. Hierzu wird ein entsprechender Schmelzofen verwendet. Die Trennung der leitenden Materialien erfolgt über die unterschiedlichen Schmelzpunkte, die für Silizium bei ca. 1410°C, für Kupfer bei ca. 1084°C und für Blei-Zinn bei ca. 330°C liegen. Das so gewonnen Silizium ist direkt in der Siliziumindustrie verwertbar. Das erhaltene Kupfer wird für Anwendungen in der Kupferindustrie verwendet, das erhaltene Blei-Zinn-Lot kann beispielsweise als neues Blei-Zinn-Lot für die Herstellung von Lötdraht zum Hartlöten verwertet werden. Bei der ersten und/oder zweiten und/oder weiteren Trennvorrichtung kann es sich um einen Elektrostatik-Korona-Walzen-Separator handeln.

In einer weiteren vorteilhaften Ausgestaltung der erfindungsgemäßen Vorrichtung ist die Zerkleinerungsvorrichtung eine Hammermühle und/oder Hammerprallmühle und/oder ein Walzenbrecher. Es besteht aber auch die Möglichkeit, dass die Vorrichtung mindestens eine pneumatische oder hydraulische Spreizvorrichtung für die mechanische Vorzerkleinerung und/oder die Montage des Photovoltaikmoduls aufweist. Die genannte Spreizvorrichtung ist der Zerkleinerungsvorrichtung vorgeschaltet und trennt den Metallrahmen sowie die elektrischen Anschlüsse, insbesondere Kabelboxen mit einer entsprechenden Verkabelung, des Photovoltaikmoduls von den restlichen Bestandteilen, insbesondere von den Solarzellen, den entsprechenden Gläsern und Kunststoffschichten. Die so gewonnenen Metallrahmen, insbesondere Aluminiumrahmen, sowie die entsprechenden Anschlüsse mit Verkabelung können ebenfalls weiter verwertet werden.

Weitere Ausgestaltungen, Merkmale und Vorteile dieses zweiten Aspekts der Erfindung können der Beschreibung des ersten Aspekts der Erfindung entnommen werden und gelten auch hierfür. Umgekehrt gelten auch die bezüglich des zweiten Aspekts der Erfindung beschriebenen Merkmale und Vorteile auch für den ersten Erfindungsaspekt.

Weitere Einzelheiten, Merkmale und Vorteile der Erfindung ergeben sich aus den in den folgenden Zeichnungen dargestellten und beschriebenen Ausführungsbeispielen. Es zeigen:
- Figur 1: eine schematisches Ablaufdiagramm eines erfindungsgemäßen Verfahrens zur Aufbereitung von Photovoltaikmodulen; und
- Figur 2: eine schematische Darstellung einer erfindungsgemäßen Vorrichtung zur Aufbereitung von Photovoltaikmodulen.

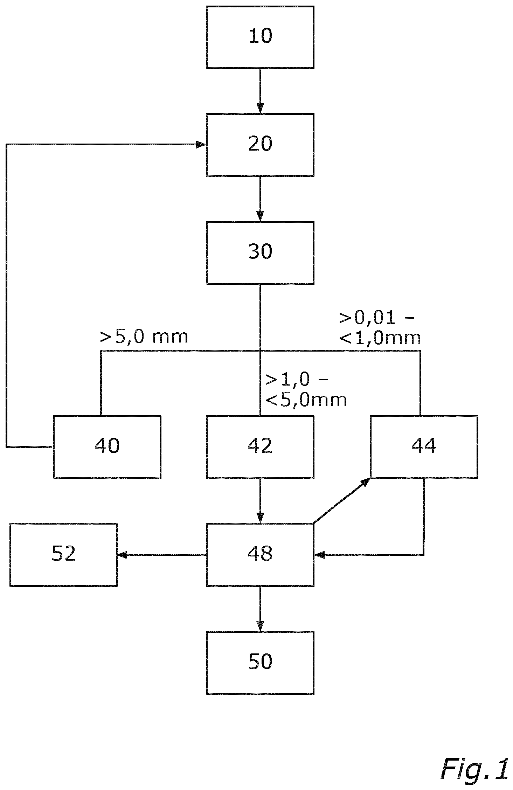

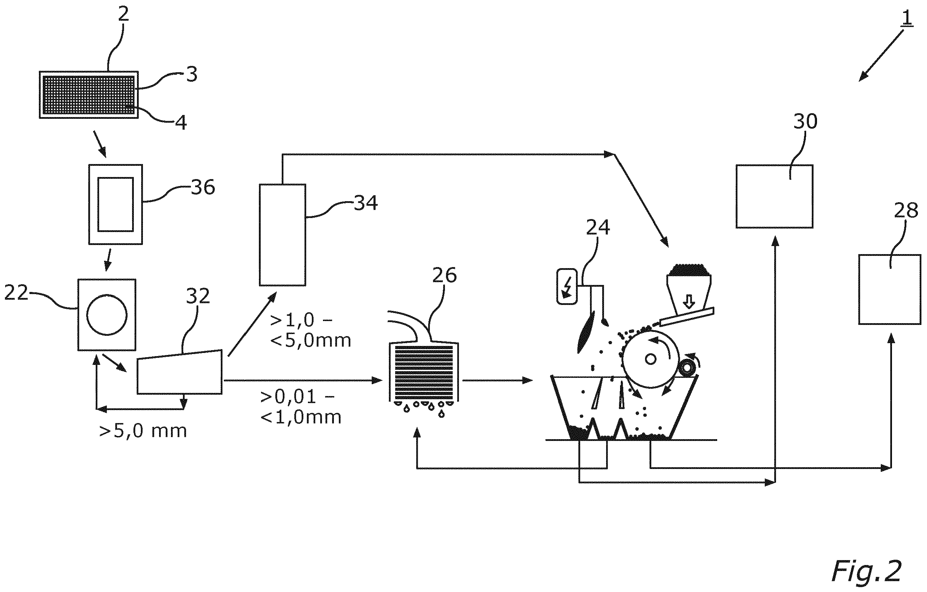

Figur 1 zeigt ein schematisches Ablaufdiagramm eines Ausführungsbeispiels eines Verfahrens zur Aufbereitung von Photovoltaikmodulen 2. In dem dargestellten Ausführungsbeispiel - welches auch in Zusammenschau mit der Fig. 2 betrachtet wird - erfolgt im Verfahrensschritt 10 eine Vorzerkleinerung beziehungsweise die Demontage des Photovoltaikmoduls 2. Dabei erfolgt eine manuelle oder mechanische Zerlegung des Photovoltaikmoduls 2 in seine einzelnen Komponenten, wie zum Beispiel den Metallrahmen 3 und die Solarzellen beziehungsweise Solarpanele 4 mit den entsprechenden Gläsern und Kunststoffschichten. Zudem werden entsprechende Kabelanschlüsse von dem Photovoltaikmodul 2 getrennt. Die verbleibenden Reste des Photovoltaikmoduls 2, insbesondere die Solarzellen 4 mit den entsprechenden Gläsern und Kunststoffschichten werden in einem folgenden Verfahrensschritt 20 einer Zerkleinerungsvorrichtung 22 zugeführt (vergleiche auch Figur 2). Dabei erfolgt eine Zerkleinerung des Photovoltaikmoduls 2. Nachdem das erhaltene Mahlgut einer Sieb-oder Dichtesortierungsvorrichtung 32 zugeführt worden ist, erfolgt im Verfahrensschritt 30 eine Aufteilung des mittels der Zerkleinerungsvorrichtung 22 erhaltenen Mahlguts in drei unterschiedlich große Kornfraktionen. Bei den drei Kornfraktionen handelt es sich um eine grobe Kornfraktion mit einem durchschnittlichen Partikeldurchmesser von > 5,0 mm, eine mittlere Kornfraktion mit einem durchschnittlichen Partikeldurchmesser von > 1,0 mm bis < 5,0 mm und eine feine Kornfraktion mit einem durchschnittlichen Partikeldurchmesser von > 0,01 mm bis < 1,0 mm. Dabei hat sich herausgestellt, dass die feine Kornfraktion insbesondere aus den Bestandteilen Glas und Silizium (Glas-Silizium-Sand) besteht. Die mittlere Kornfraktion besteht insbesondere aus Glas, leitenden Materialien und Folien, insbesondere Kunststofffolien. Die grobe Fraktion des Mahlgutes umfasst insbesondere Folien mit Anhaftungen von Glas, Silizium und leitenden Materialien wie Leiterbahnen. Diese grobe Kornfraktion wird in einem Verfahrensschritt 40 wieder der Zerkleinerungsvorrichtung 22 zur weiteren Zerkleinerung rückgeführt. Dagegen wird die mittlere Kornfraktion einem Windsichter 34 zugeführt sodass in einem Verfahrensschritt 42 eine Trennung der mittleren Kornfraktion in Bestandteile mit relativ geringer Dichte und in eine Fraktion mit relativ höherer Dichte erfolgt. Es erfolgt also eine Trennung in eine relativ leichte Fraktion bestehend insbesondere aus Kunststoff und/oder Kunststofffolie und eine relativ schwere Fraktion, insbesondere aus Glas und leitenden Materialien. Die erhaltenen Kunststoffpartikel und Kunststofffolien können einer direkten Verwertung zugeführt werden. Die relativ schwere Fraktion wird anschließend einer ersten Trennvorrichtung 24 zugeführt.

Die mittels der Sieb- oder Dichtesortierungsvorrichtung 32 erhaltene feine Kornfraktion des Mahlgutes wird dagegen einer Trockenvorrichtung 26 zugeführt und in einem Verfahrensschritt 44 getrocknet. Nach Trocknung der feinen Kornfraktion wird diese ebenfalls der ersten Trennvorrichtung 24 zugeführt. Mittels der ersten Trennvorrichtung 24 erfolgt im Verfahrensschritt 48 eine Separation von leitenden und nicht-leitenden Materialien des Mahlguts. Die Trennung erfolgt dabei elektrostatisch mittels eines elektrostatischen Metall-/Kunststoffseparators. Nach der Trennung von leitenden und nicht-leitenden Materialien werden die nicht-leitenden Materialien in einem weiteren Verfahrensschritt 50 mittels einer zweiten Trennvorrichtung 28 in Glaspartikel und weitere nicht-leitende Partikel, insbesondere Kunststoff- und/oder Silikonpartikel getrennt. Die durch den Verfahrensschritt 48 erhaltenen leitenden Materialien werden einer dritten Trennvorrichtung 30 zugeführt und in einem Verfahrensschritt 52 in Metallpartikel und Siliziumpartikel getrennt. Die Trennung kann dabei ebenfalls elektrostatisch erfolgen. Es besteht aber auch die Möglichkeit, dass die Trennung mittels eines Aufschmelzverfahrens basierend auf den unterschiedlichen Schmelzpunkten der Materialien erfolgt.

Weitere Ausgestaltungen des Verfahrens sind möglich. So kann beispielsweise die in der ersten Trennvorrichtung 24 zu separierende Materialfraktion bei einem zu hohen Feuchtegehalt zumindest teilweise wieder in den Trockner 26 zurückgeführt werden und in dem entsprechenden Verfahrensschritt 44 getrocknet werden. Des Weiteren besteht die Möglichkeit - wie bereits erwähnt - , dass die im Verfahrensschritt 42 erhaltene leichte Fraktion der der mittleren Kornfraktion, die insbesondere aus Kunststofffolien besteht direkt aus dem System entfernt wird und einer entsprechenden Wiederverwertung zugeführt wird.

Fig. 2 zeigt eine schematische Darstellung einer Vorrichtung 1 zur Aufbereitung von Photovoltaikmodulen 2. Man erkennt, dass das Photovoltaikmodul 2 insbesondere einen Metallrahmen 3, nämlich einen Aluminiumrahmen sowie ein Solarpanel 4 umfassend Solarzellen, verschiedene Gläser und Kunststofffolien, besteht. In dem dargestellten Ausführungsbeispiel umfasst die Vorrichtung 1 eine pneumatische oder hydraulische Spreizvorrichtung 36 für die mechanische Vorzerkleinerung und/oder Demontage des Photovoltaikmoduls 2. Dabei wird der Metallrahmen 3 sowie weitere Elemente des Photovoltaikmoduls 2, wie zum Beispiel Kabelanschlüsse und Kabel von dem Solarpanel 4 getrennt. Das Solarpanel 4 wird dann der Zerkleinerungsvorrichtung 22 zugeführt.

Die Zerkleinerungsvorrichtung 22 zerkleinert das Photovoltaikmodul 2 beziehungsweise das Solarpanel 4. Die Zerkleinerung des Solarpanels 4 kann dabei mittels einer Rotorhammerprallmühle erfolgen. Die Rotorhammerprallmühle kann dabei eine verstellbare, gefederte Prallwand, einen einstellbaren Mahlspalt und eine stufenlose Drehzahlregelung durch eine entsprechende Frequenzumrichterregelung umfassen. Das Mahlgut wird anschließend der Sieb- oder Dichtesortierungsvorrichtung 32 zugeführt und in drei unterschiedliche Kornfraktionen getrennt beziehungsweise gesiebt. Die Siebvorrichtung ist hier als mobile, verfahrbare Vibrations-Taumelsiebvorrichtung ausgebildet. Bei den drei Kornfraktionen handelt es sich um eine grobe Kornfraktion mit einem durchschnittlichen Partikeldurchmesser von >5,0 mm, eine mittlere Kornfraktion mit einem durchschnittlichen Partikeldurchmesser von >1,0 mm bis <5,0 mm und eine feine Kornfraktion mit einem durchschnittlichen Partikeldurchmesser von >0,01 mm bis <1,0 mm. Abweichungen in den einzelnen Kornfraktionen bis zu +/- 10 Prozent sind möglich. Man erkennt, dass die grobe Kornfraktion in die Zerkleinerungsvorrichtung 22 rückgeführt wird und weiter zerkleinert wird. Die mittlere und feine Kornfraktion werden dagegen aus der Sieb- oder Dichtesortierungsvorrichtung 32 ausgeschleust und der weiteren Materialtrennung zugeführt. In dem dargestellten Ausführungsbeispiel wird die mittlere Kornfraktion einem Windsichter 34 zugeführt. Anstelle des Windsichters können auch Gegenstromsichter oder Schwerkraftsichter oder vergleichbare Vorrichtungen zur Sichtung von Materialien verwendet werden. Mittels der Windsichtung durch den Windsichter 34 erfolgt eine erste Auftrennung der mittleren Kornfraktion in eine relativ leichte Fraktion mit relativ niedriger Dichte besteht insbesondere aus Kunststoff und/oder Kunststofffolien und eine relativ schwere Fraktion, das heißt mit einer relativ höheren Dichte, insbesondere aus Glas und leitenden Materialien. Die Leichtfraktion der mittleren Kornfraktion des Mahlgutes kann dabei direkt weiterverwertet werden. Die relativ schwere Fraktion der mittleren Kornfraktion wird der ersten Trennvorrichtung 24 zugeführt.

Man erkennt, dass die feine Kornfraktion aus der Sieb- und Dichtesortierungsvorrichtung 32 zunächst einer Trocknungsvorrichtung 26 zur Trocknung zugeführt wird. Anschließend wird das getrocknete Material ebenfalls der ersten Trennvorrichtung 24 zugeführt. Es besteht aber auch die Möglichkeit, dass die mittlere Kornfraktion oder zumindestens ein Teil der mittleren Kornfraktion aus der Sieb- oder Dichtesortierungsvorrichtung 32 ebenfalls der Trocknungsvorrichtung 26 und nach erfolgter Trocknung der ersten Trennvorrichtung 24 oder dem Windsichter 34 zugeführt wird.

Bei der ersten Trennvorrichtung 24 handelt es sich um einen elektrostatischen Metall-/Kunststoffseparator der das Mahlgut beziehungsweise die Kornfraktionen in leitende und nicht-leitende Bestandteile trennt. Bei den nicht-leitenden Bestandteilen handelt es sich insbesondere um Glaspartikel, Silikonpartikel und Folien, insbesondere Kunststofffolien, die einer zweiten Trennvorrichtung 28 zur Trennung von Glaspartikeln von den entsprechenden Kunststofffolien und Silikonpartikeln durchführt. Die dargestellte zweite Trennvorrichtung 28 ist ebenfalls ein Windsichter.

Des Weiteren erkennt man, dass die durch die erste Trennvorrichtung 24 erhaltene leitende Kornfraktion einer dritten Trennvorrichtung 30 zugeführt wird. In der dritten Trennvorrichtung 30 erfolgt eine Trennung der metallischen Bestandteile beziehungsweise Metallpartikel von den Siliziumpartikeln des Mahlgutes. Bei der Trennvorrichtung 30 kann es sich ebenfalls um einen elektrostatischen Separator handeln. Es besteht aber auch die Möglichkeit, dass die dritte Trennvorrichtung 30 ein Schmelzofen zur Durchführung eines Ausschmelzverfahrens ist. Dabei wird aufgrund der unterschiedlichen Schmelzpunkte der einzelnen Metalle beziehungsweise des Siliziums eine Trennung der einzelnen Materialien voneinander erzielt.

Das dargestellte Verfahren kann voll- oder halbautomatisch durchgeführt werden. Zwischen den einzelnen Elementen der Vorrichtung 1 können beispielsweise entsprechende Fördervorrichtungen ausgebildet sein, sodass die jeweiligen Materialien und Mahlgutfraktionen zwischen den einzelnen Elementen der Vorrichtung 1 transportiert werden können. Es besteht aber auch die Möglichkeit, dass die beispielsweise durch das Sieben mit der Sieb- und Dichtesortierungsvorrichtung 32 erhaltenen Kornfraktionen zunächst in entsprechenden Behältern oder Gefäßen gesammelt wird und anschließend der weiteren Verarbeitung zugeführt wird. Zudem besteht auch die Möglichkeit, dass das durch die Zerkleinerungsvorrichtung 22 erhaltene Mahlgut in mehr als drei Korngrößenfraktionen aufgeteilt wird. Auch weitere Trocknungsvorgänge und Trocknungsvorrichtungen sind innerhalb des Verfahrensablaufs und beim Aufbau der Vorrichtung 1 denkbar. Die Vorrichtung 1 kann auch modular aufgebaut sein, so dass die einzelnen Elemente beziehungsweise Module der Vorrichtung 1 gut transportierbar sind und einen Aufbau der Vorrichtung 1 "vor Ort" ermöglichen.

## Patentansprüche

1. Verfahren zur Aufbereitung von Photovoltaikmodulen (2) umfassend zumindest folgende Schritte:
- Zuführung des Photovoltaikmoduls (2) zu mindestens einer Zerkleinerungsvorrichtung (22) und Zerkleinern des Photovoltaikmoduls (2);
- Aufteilung des mittels der Zerkleinerungsvorrichtung (22) erhaltenen Mahlguts in mindestens drei unterschiedlich große Kornfraktionen;
- Rückführen einer groben Kornfraktion zu der Zerkleinerungsvorrichtung (22) zur weiteren Zerkleinerung; **gekennzeichnet durch**
- Überführen einer mittleren Kornfraktion zu einer ersten Trennvorrichtung (24) für die Separation von leitenden und nicht-leitenden Materialien des Mahlguts;
- Überführen einer feinen Kornfraktion zu einer Trocknungsvorrichtung (26) und Trocknen der feinen Kornfraktion; und
- Überführen der getrockneten feinen Kornfraktion zu der ersten Trennvorrichtung (24) oder einer weiteren Trennvorrichtung für die Separation von leitenden und nicht-leitenden Materialien des Mahlguts.

2. Verfahren nach Anspruch 1,
**dadurch gekennzeichnet,**
**dass** die grobe Kornfraktion einen durchschnittlichen Partikeldurchmesser von >5,0 mm aufweist und/oder die mittlere Kornfraktion einen durchschnittlichen Partikeldurchmesser von >1,0 mm bis <5,0 mm aufweist und/oder die feine Kornfraktion einen durchschnittlichen Partikeldurchmesser von >0,01 mm bis <1,0 mm aufweist.

3. Verfahren nach einem der vorhergehenden Ansprüche,
**dadurch gekennzeichnet,**
**dass** vor einer Zuführung des Photovoltaikmoduls (2) zu der Zerkleinerungsvorrichtung (22) eine manuelle und/oder mechanische Vorzerkleinerung und/oder Demontage des Photovoltaikmoduls (2) erfolgt.

4. Verfahren nach einem der vorhergehenden Ansprüche,
**dadurch gekennzeichnet,**
**dass** nach der Separation von leitenden und nicht-leitenden Materialien des Mahlguts die Fraktion der nicht-leitenden Materialien einer zweiten Trennvorrichtung (28) zur Separation der enthaltenen Glaspartikel von weiteren nicht-leitenden Partikeln, insbesondere von Kunststoff- und/oder Silikonpartikeln, zugeführt wird.

5. Verfahren nach einem der vorhergehenden Ansprüche,
**dadurch gekennzeichnet,**
**dass** nach der Separation von leitenden und nicht-leitenden Materialien des Mahlguts die Fraktion der leitenden Materialien einer dritten Trennvorrichtung (30) zur Separation der enthaltenen Metallpartikel voneinander und von weiteren leitenden Partikeln, insbesondere von Siliziumpartikeln, zugeführt wird.

6. Verfahren nach einem der vorhergehenden Ansprüche,
**dadurch gekennzeichnet,**
**dass** nach der Separation von leitenden und nicht-leitenden Materialien des Mahlguts zumindest ein Teil des Mahlgut nochmals der Trockenvorrichtung (26) zu weiteren Trocknung zugeführt wird.

7. Verfahren nach einem der vorhergehenden Ansprüche,
**dadurch gekennzeichnet,**
**dass** die Aufteilung des mittels der Zerkleinerungsvorrichtung (22) erhaltenen Mahlguts mittels Sieben und/oder einer Dichtesortierung erfolgt.

8. Verfahren nach einem der vorhergehenden Ansprüche,
**dadurch gekennzeichnet,**
**dass** die Separation von leitenden und nicht-leitenden Materialien des Mahlguts mittels elektrostatischer Separation erfolgt.

9. Verfahren nach einem der Ansprüche 5 bis 8,
**dadurch gekennzeichnet,**
**dass** die Separation von leitenden, unterschiedlich ausgebildeten Materialien des Mahlguts voneinander mittels elektrostatischer Separation erfolgt.

10. Verfahren nach einem der vorhergehenden Ansprüche,
**dadurch gekennzeichnet,**
**dass** vor der Überführung der mittleren Kornfraktion zu der ersten Trennvorrichtung (24) eine Trennung der mittleren Kornfraktion in eine relativ leichte Fraktion bestehend insbesondere aus Kunststoff und/oder Kunststofffolie und eine relativ schwere Fraktion, insbesondere aus Glas und leitenden Materialien, erfolgt.

11. Verfahren nach Anspruch 10,
**dadurch gekennzeichnet,**
**dass** die Trennung in eine leichte und schwere Fraktion mittels mindestens einem Gegenstromsichters, Windsichters oder Schwerkraftsichters (34) erfolgt.

12. Verfahren nach einem der vorhergehenden Ansprüche,
**dadurch gekennzeichnet,**
**dass** die feine Kornfraktion des Mahlguts nach dem Trocknen einen Feuchtegehalt von kleiner 0,1% aufweist.

13. Vorrichtung (1) zur Aufbereitung von Photovoltaikmodulen (2) umfassend
- mindestens eine Zerkleinerungsvorrichtung (22) für die Zerkleinerung der Photovoltaikmodule (2);
- mindestens eine Sieb- oder Dichtesortierungvorrichtung (32) für eine Aufteilung des mittels der Zerkleinerungsvorrichtung (22) erhaltenen Mahlguts in mindestens drei unterschiedlich große Kornfraktionen; **gekennzeichnet durch**
- mindestens eine Trocknungsvorrichtung (26) für die Trocknung einer feinen Kornfraktion des Mahlguts; und
- mindestens eine erste Trennvorrichtung (24) und/oder weitere Trennvorrichtung für die Separation von leitenden und nicht-leitenden Materialien des Mahlguts in einer mittleren Korngröße des Mahlguts und/oder in der mittels der Trocknungsvorrichtung (26) getrockneten feinen Korngröße des Mahlguts.

14. Vorrichtung nach Anspruch 13,
**dadurch gekennzeichnet,**
**dass** die Vorrichtung (1) mindestens einen Gegenstromsichter, Windsichter oder Schwerkraftsichter (34) aufweist, wobei der Gegenstromsichter, Windsichter oder Schwerkraftsichter (34) der Sieb- oder Dichtesortierungvorrichtung (32) nachgeschaltet ist und zur Aufnahme und Trennung der mittleren Kornfraktion des Mahlguts in eine relativ leichte Fraktion bestehend insbesondere aus Kunststoff und/oder Kunststofffolie und eine relativ schwere Fraktion, insbesondere aus Glas und leitenden Materialien, ausgebildet ist.

15. Vorrichtung nach Anspruch 13 oder 14,
**dadurch gekennzeichnet,**
**dass** die Vorrichtung (1) mindestens eine zweite Trennvorrichtung (28) für die Separation der erhaltenen nicht-leitenden Materialien in Glaspartikel und weitere nicht-leitenden Partikel, insbesondere Kunststoff- und/oder Silikonpartikel, und/oder mindestens eine dritte Trennvorrichtung (30) für die Separation der erhaltenen leitenden Materialien in Metallpartikel und weitere leitenden Partikel, insbesondere Siliziumpartikel, umfasst.

16. Vorrichtung nach einem der Ansprüche 13 bis 15,
**dadurch gekennzeichnet,**
**dass** die Zerkleinerungsvorrichtung (22) eine Hammermühle und/oder Hammerprallmühle und/oder eine Trommelmühle und/oder ein Walzenbrecher ist.

17. Vorrichtung nach einem der Ansprüche 13 bis 16,
**dadurch gekennzeichnet,**
**dass** die erste Trennvorrichtung (24) und/oder die weitere Trennvorrichtung ein elektrostatischer Metall-/Kunststoffseparator ist und/oder die zweite Trennvorrichtung (28) ein Windsichter ist und/oder die dritte Trennvorrichtung (30) ein elektrostatischer Separator oder ein Schmelzofen zur Durchführung eines Ausschmelzverfahrens ist und/oder die Trocknungsvorrichtung (26) ein Trowaltrockner ist.

18. Vorrichtung nach einem der Ansprüche 13 bis 17,
**dadurch gekennzeichnet,**
**dass** die Vorrichtung (1) mindestens eine pneumatische oder hydraulische Spreizvorrichtung (36) für die mechanische Vorzerkleinerung und/oder Demontage des Photovoltaikmoduls (2) aufweist.

## Claims

1. A method for processing photovoltaic modules (2), comprising at least the following steps:
- supplying the photovoltaic module (2) to at least one crushing device (22) and crushing the photovoltaic module (2);
- dividing the ground material obtained by means of the crushing device (22) into at least three differently sized grain fractions;
- recycling a coarse grain fraction to the crushing device (22) for further crushing; **characterized by**
- transferring a medium grain fraction to a first separating device (24) for the separation of conducting and non-conducting materials of the ground material;
- transferring a fine grain fraction to a drying device (26) and drying the fine grain fraction; and
- transferring the dried fine grain fraction to the first separating device (24) or a further separating device for the separation of conducting and non-conducting materials of the ground material.

2. The method according to claim 1,
**characterized in that**
the coarse grain fraction has an average particle diameter of > 5.0 mm and/or the medium grain fraction has an average particle diameter of > 1.0 mm to < 5.0 mm and/or the fine grain fraction has an average particle diameter of > 0.01 mm to < 1.0 mm.

3. The method according to any one of the preceding claims,
**characterized in that**
before supply of the photovoltaic module (2) to the crushing device (22), manual and/or mechanical pre-crushing and/or disassembly of the photovoltaic module (2) are effected.

4. The method according to any one of the preceding claims,
**characterized in that**
after the separation of conducting and non-conducting materials of the ground material, the fraction of the non-conducting materials is supplied to a second separating device (28) for the separation of the contained glass particles from further non-conducting particles, in particular plastic and/or silicone particles.

5. The method according to any one of the preceding claims,
**characterized in that**
after the separation of conducting and non-conducting materials of the ground material, the fraction of the conducting materials is supplied to a third separating device (30) for the separation of the contained metal particles from each other and from further conducting particles, in particular silicon particles.

6. The method according to any one of the preceding claims,
**characterized in that**
after the separation of conducting and non-conducting materials of the ground material, at least a part of the ground material is again supplied to the drying device (26) for further drying.

7. The method according to any one of the preceding claims,
**characterized in that**
the division of the ground material obtained by means of the crushing device (22) is effected by means of sieving and/or a density sorting.

8. The method according to any one of the preceding claims,
**characterized in that**
the separation of conducting and non-conducting materials of the ground material is effected by means of electrostatic separation.

9. The method according to any one of claims 5 to 8,
**characterized in that**
the separation of conducting, differently formed materials of the ground material from each other is effected by means of electrostatic separation.

10. The method according to any one of the preceding claims,
**characterized in that**
before the transfer of the medium grain fraction to the first separating device (24), a separation of the medium grain fraction into a relatively light fraction in particular consisting of plastic and/or plastic foil and a relatively heavy fraction, in particular of glass and conducting materials, is effected.

11. The method according to claim 10,
**characterized in that**
the separation into a light and heavy fraction is effected by means of at least one counterflow separator, air separator or gravity separator (34).

12. The method according to any one of the preceding claims,
**characterized in that**
the fine grain fraction of the ground material has a moisture content of less than 0.1 % after drying.

13. A device (1) for processing photovoltaic modules (2), comprising
- at least one crushing device (22) for crushing the photovoltaic modules (2);
- at least one sieving or density sorting device (32) for a division of the ground material obtained by means of the crushing device (22) into at least three differently sized grain fractions; **characterized by**
- at least one drying device (26) for drying a fine grain fraction of the ground material; and
- at least a first separating device (24) and/or further separating device for the separation of conducting and non-conducting materials of the ground material in a medium grain size of the ground material and/or in the fine grain size of the ground material dried by means of the drying device (26).

14. The device according to claim 13,
**characterized in that**
the device (1) comprises at least one counterflow separator, air separator or gravity separator (34), wherein the counterflow separator, air separator or gravity separator (34) is arranged downstream of the sieving or density sorting device (32) and is formed for receiving and separating the medium grain fraction of the ground material into a relatively light fraction in particular consisting of plastic or plastic foil and a relatively heavy fraction, in particular of glass and conducting materials.

15. The device according to claim 13 or 14,
**characterized in that**
the device (1) includes at least a second separating device (28) for the separation of the obtained non-conducting materials into glass particles and further non-conducting particles, in particular plastic and/or silicone particles, and/or at least a third separating device (30) for the separation of the obtained conducting materials into metal particles and further conducting particles, in particular silicon particles.

16. The device according to any one of claims 13 to 15,
**characterized in that**
the crushing device (22) is a hammer mill and/or hammer impact mill and/or a drum mill and/or a roller crusher.

17. The device according to any one of claims 13 to 16,
**characterized in that**
the first separating device (24) and/or the further separating device are an electrostatic metal/plastic separator and/or the second separating device (28) is an air separator and/or the third separating device (30) is an electrostatic separator or a melting furnace for performing a melt-out method and/or the drying device (26) is a barrel finishing dryer.

18. The device according to any one of claims 13 to 17,
**characterized in that**
the device (1) comprises at least one pneumatic or hydraulic spreading device (36) for the mechanical pre-crushing and/or disassembly of the photovoltaic module (2).

## Revendications

1. Procédé de préparation de modules photovoltaïques (2) comprenant au moins les étapes suivantes :
- acheminer le module photovoltaïque (2) jusqu'à au moins un dispositif de broyage (22) et broyer le module photovoltaïque (2) ;
- diviser la matière broyée obtenue au moyen du dispositif de broyage (22) en au moins trois fractions granulométriques de différentes tailles ;
- renvoyer une fraction granulométrique grossière dans le dispositif de broyage (22) en vue d'un broyage ultérieur ; **caractérisé par**
- transférer une fraction granulométrique moyenne vers un premier dispositif de séparation (24) pour séparer les matériaux conducteurs et les matériaux non conducteurs de la matière broyée ;
- transférer une fraction granulométrique fine vers un dispositif de séchage (26) et sécher la fraction granulométrique fine ; et
- transférer la fraction granulométrique fine séchée vers le premier dispositif de séparation (24) ou un dispositif de séparation supplémentaire pour séparer les matériaux conducteurs et les matériaux non conducteurs de la matière broyée.

2. Procédé selon la revendication 1,
**caractérisé en ce**
**que** la fraction granulométrique grossière a un diamètre de particule moyen > 5,0 mm et/ou la fraction granulométrique moyenne a un diamètre de particule moyen de > 1,0 mm jusqu'à < 5,0 mm et/ou la fraction granulométrique fine a un diamètre de particule moyen de > 0,01 mm jusqu'à < 1,0 mm.

3. Procédé selon l'une des revendications précédentes,
**caractérisé en ce**
**qu'**avant un acheminement du module photovoltaïque (2) jusqu'au dispositif de broyage (22), un pré-broyage manuel et/ou mécanique et/ou un démontage du module photovoltaïque (2) est effectué.

4. Procédé selon l'une des revendications précédentes,
**caractérisé en ce**
**qu'**après la séparation des matériaux conducteurs et des matériaux non conducteurs de la matière broyée, la fraction des matériaux non conducteurs d'un deuxième dispositif de séparation (28) est acheminée afin de séparer les particules de verre obtenues d'autres particules non conductrices, en particulier des particules de matière plastique et/ou de silicone.

5. Procédé selon l'une des revendications précédentes,
**caractérisé en ce**
**qu'**après la séparation des matériaux conducteurs et des matériaux non conducteurs de la matière broyée, la fraction des matériaux conducteurs d'un troisième dispositif de séparation (30) est acheminée afin de séparer les unes des autres les particules métalliques obtenues et d'autres particules conductrices, en particulier des particules de silicium.

6. Procédé selon l'une des revendications précédentes,
**caractérisé en ce**
**qu'**après la séparation des matériaux conducteurs et des matériaux non conducteurs de la matière broyée, au moins une partie de la matière broyée est à nouveau acheminée jusqu'au dispositif de séchage (26) en vue d'un séchage supplémentaire.

7. Procédé selon l'une des revendications précédentes,
**caractérisé en ce**
**que** la division de la matière broyée obtenue au moyen du dispositif de broyage (22) s'effectue au moyen d'un criblage et/ou d'un tri par densité.

8. Procédé selon l'une des revendications précédentes,
**caractérisé en ce**
**que** la séparation des matériaux conducteurs et des matériaux non conducteurs de la matière broyée s'effectue par séparation électrostatique.

9. Procédé selon l'une des revendications 5 à 8,
**caractérisé en ce**
**que** la séparation des matériaux conducteurs de la matière broyée ayant différentes formes s'effectue par séparation électrostatique.

10. Procédé selon l'une des revendications précédentes,
**caractérisé en ce**
**qu'**avant le transfert de la fraction granulométrique moyenne vers le premier dispositif de séparation (24), une séparation de la fraction granulométrique moyenne est effectuée en une fraction relativement légère en particulier constituée de matière plastique et/ou de film de matière plastique, et en une fraction relativement lourde, en particulier constituée de verre et de matériaux conducteurs.

11. Procédé selon la revendication 10,
**caractérisé en ce**
**que** la séparation en une fraction légère et une fraction lourde s'effectue au moyen d'au moins un séparateur à contre-courant, d'un séparateur à air ou d'un séparateur par gravité (34).

12. Procédé selon l'une des revendications précédentes,
**caractérisé en ce**
**que** la fraction granulométrique fine de la matière broyée a une teneur en humidité inférieure à 0,1 % après le séchage.

13. Dispositif (1) de préparation de modules photovoltaïques (2) comprenant :
- au moins un dispositif de broyage (22) pour le broyage de modules photovoltaïques (2) ;
- au moins un dispositif de criblage ou de tri par densité (32) pour diviser la matière broyée obtenue au moyen du dispositif de broyage (22) en au moins trois fractions granulométriques de différentes tailles ; **caractérisé par**
- au moins un dispositif de séchage (26) pour sécher une fraction granulométrique fine de la matière broyée ; et
- au moins un premier dispositif de séparation (24) et/ou un dispositif de séparation supplémentaire pour séparer les matériaux conducteurs et les matériaux non conducteurs de la matière broyée en une granulométrie moyenne de la matière broyée et/ou en une granulométrie fine de la matière broyée séchée au moyen du dispositif de séchage (26).

14. Dispositif selon la revendication 13,
**caractérisé en ce**
**que** le dispositif (1) comporte au moins un séparateur à contre-courant, un séparateur à air ou un séparateur par gravité (34), le classificateur à contre-courant, le séparateur à air ou le séparateur par gravité (34) étant installé en aval du dispositif de criblage ou de tri par densité (32) et étant conçu pour recevoir et séparer la fraction granulométrique moyenne de la matière broyée en une fraction relativement légère, en particulier constituée de matière plastique et/ou de film de matière plastique, et en une fraction relativement lourde, en particulier constituée de verre et de matériaux conducteurs.

15. Dispositif selon la revendication 13 ou 14,
**caractérisé en ce**
**que** le dispositif (1) comprend au moins un deuxième dispositif de séparation (28) pour séparer les matériaux non conducteurs obtenus en particules de verre et autres particules non conductrices, en particulier des particules de matière plastique et/ou de silicone, et/ou au moins un troisième dispositif de séparation (30) pour séparer les matériaux conducteurs obtenus en particules métalliques et autres particules conductrices, en particulier des particules de silicium.

16. Dispositif selon l'une des revendications 13 à 15,
**caractérisé en ce**
**que** le dispositif de broyage (22) est un broyeur à marteaux et/ou un broyeur à chocs à marteaux et/ou un broyeur à tambour et/ou un broyeur à cylindres.

17. Dispositif selon l'une des revendications 13 à 16,
**caractérisé en ce**
**que** le premier dispositif de séparation (24) et/ou le dispositif de séparation supplémentaire est un séparateur de métal/plastique électrostatique et/ou le deuxième dispositif de séparation (28) est un séparateur à air et/ou le troisième dispositif de séparation (30) est un séparateur électrostatique ou un four de fusion pour la mise en oeuvre d'un procédé de fusion et/ou le dispositif de séchage (26) est un sécheur Trowal.

18. Dispositif selon l'une des revendications 13 à 17,
**caractérisé en ce**
**que** le dispositif (1) comporte au moins un dispositif d'écartement pneumatique ou hydraulique (36) pour le pré-broyage mécanique et/ou le démontage du module photovoltaïque (2).
